# EUROPEAN PATENT APPLICATION

(11) **EP 4 738 536 A2**
(43) Date of publication of application: **06.05.2026**
(21) Application number: 25205765.8
(22) Date of filing: 30.09.2025
(51) Int. Cl.: H01M 10/617, H01M 10/643, H01M 10/653, H01M 50/213, H01M 50/264, H01M 50/35, H01M 50/291, H01M 50/293

(54) **BATTERY ASSEMBLY**

(30) Priority: 31.10.2024 KR 20240152830
(71) Applicant: SK On Co., Ltd., Seoul 03161 (KR)
(72) Inventor: KWAK, Seung Il, Daejeon 34124 (KR); JEON, Hae Ryong, Daejeon 34124 (KR)
(74) Representative: Prüfer & Partner mbB Patentanwälte · Rechtsanwälte

(57) **Abstract**

The present disclosure relates to a battery assembly comprising: a plurality of battery cells having a cylindrical shape; a receiving member forming a placement space for receiving the plurality of battery cells; and a receiving case including a receiving space for receiving the plurality of battery cells and the receiving member, a receiving floor forming a bottom surface of the receiving space and including a communication hole, a venting space disposed below the receiving floor, and a communication hole formed on the receiving floor to communicate the receiving space and the venting space.

## Description

### BACKGROUND OF THE INVENTION

### 1. Field

The present disclosure relates to a battery assembly. More particularly, it relates to a battery assembly with improved thermal stability and manufacturing efficiency.

### 2. Description of the Related Art

In the battery manufacturing process of manufacturing a battery pack using cylindrical battery cells, individual cylindrical battery cells are installed inside the battery pack instead of grouping a plurality of cylindrical battery cells. Therefore, the manufacturing process of the battery pack is complicated and the manufacturing efficiency of the battery pack is reduced, and it is necessary to improve it.

In addition, conventional battery packs manufactured using cylindrical battery cells do not cool the cylindrical battery cells effectively because they cool the cylindrical battery cells only through the lower part of the cylindrical battery cells.

According to one aspect of the present disclosure, an object of the present disclosure is to provide a battery pack including a structure capable of suppressing heat propagation between cylindrical battery cells.

In another aspect of the present disclosure, an object of the present disclosure is to reduce the temperature variation of cylindrical battery cells received in a battery pack.

In another aspect of the present disclosure, an object of the present disclosure is to effectively cool the cylindrical battery cells received in the battery pack.

In another aspect of the present disclosure, an object of the present disclosure is to modularize cylindrical battery cells.

In another aspect of the present disclosure, an object of the present disclosure is to simplify the manufacturing process of battery cells.

In another aspect of the present disclosure, an object of the present disclosure is to improve the manufacturing efficiency of battery cells.

Furthermore, the present disclosure can be widely applied to electric vehicles, battery charging stations, energy storage systems (ESS), and other green technology fields such as photovoltaics and wind power using battery cells. In addition, the battery assembly according to the present disclosure and the battery cell including the same can be used for eco-friendly mobility and the like including electric vehicles and hybrid vehicles for preventing climate change by suppressing air pollution and greenhouse fluid emission.

### SUMMARY OF THE INVENTION

A battery assembly according to an embodiment of the present disclosure may comprise: a plurality of battery cells having a cylindrical shape; a receiving member forming a placement space for receiving the plurality of battery cells; and a receiving case including a receiving space for receiving the plurality of battery cells and the receiving member, a receiving floor forming a bottom surface of the receiving space and including a communication hole, a venting space disposed below the receiving floor, and a communication hole formed on the receiving floor to communicate the receiving space and the venting space; wherein the receiving member may include a supporting portion forming a bottom surface of the receiving member and supported by the receiving floor, a curved portion extending from the supporting portion toward the plurality of battery cells and formed as a curved surface corresponding to a portion of each outer peripheral surface of the plurality of battery cells and facing the plurality of battery cells, and a through-hole penetrating the supporting portion at a location corresponding to the communication hole.

In an embodiment, the curved portion may have a wavy shape.

In an embodiment, the battery assembly may further comprise: a heat dissipation portion positioned between the curved portion and the plurality of battery cells.

In an embodiment, the curved portion and the supporting portion may be provided with an insulation coating.

In an embodiment, the curved portion may include a first body and a second body arranged with the plurality of battery cells therebetween, wherein the supporting portion may include a first bottom extending from one end of the first body toward the second body, a first recess in which a portion of one edge of the first bottom is recessed in a direction away from the second body, a second bottom extending from one end of the second body toward the first body, and a second recess in which a portion of one edge of the second bottom is recessed in a direction away from the first body at a location corresponding to the first recess, and wherein the first recess and the second recess may be connected to each other to form the through-hole when the first bottom and the second bottom are connected.

In an embodiment, the first body, the first bottom, the second body, and the second bottom may be formed of the same material.

In an embodiment, the first body, the first bottom, the second body, and the second bottom may be formed of different materials.

In an embodiment, the curved portion may include the first body and the second body arranged with the plurality of battery cells interposed therebetween, and the supporting portion extends from one end of the first body and is connected to one end of the second body.

In an embodiment, the through-hole and the communication hole may be each provided in a plurality, and the through-holes are arranged to correspond one-to-one to the communication holes.

In an embodiment, an imaginary central axis of any one of the battery cells may pass through any one of the through-holes corresponding to the one of the battery cells.

In an embodiment, the through-hole may extend along an alignment direction of the plurality of battery cells and overlaps with the communication hole.

In an embodiment, the curved portion may be provided in a zigzag shape, and the placement space may be divided into a plurality of spaces so that the battery cells are received in the plurality of spaces respectively between the curved portions.

In an embodiment, the receiving member may further include side portions extending from a periphery of the supporting portion and surrounding at least a portion of the plurality of battery cells.

In an embodiment, the battery assembly may further comprise: a cooling path disposed on one of both sides of the receiving floor and through which a coolant for cooling the plurality of battery cells moves.

In an embodiment, a gas is generated in any one of the battery cells, and at least a portion of the gas may move into the venting space through the through-hole and the communication hole.

In an embodiment, the receiving case may include an outlet for communicating the venting space with the outside.

In an embodiment, the receiving case may include walls compartmentalizing the venting space.

A battery assembly according to another embodiment of the present disclosure may comprise: a plurality of stacking assemblies including a supporting portion forming a bottom surface of a placement space for a plurality of battery cells and a curved portion extending from the supporting portion toward the plurality of battery cells and formed as a curved surface in a wavy shape corresponding to a portion of each outer peripheral surface of the plurality of battery cells and facing the plurality of battery cells; a busbar electrically connected to the plurality of battery cells; a receiving case forming a receiving space for receiving the plurality of stacking assembly; and a partition compartmentalizing the receiving space.

According to one embodiment of the present disclosure, it is possible to provide a battery pack including a structure capable of suppressing heat propagation between cylindrical battery cells.

According to another embodiment of the present disclosure, the temperature variation of the cylindrical battery cells received in the battery pack can be reduced.

According to another embodiment of the present disclosure, the cylindrical battery cells received in the battery pack can be effectively cooled.

According to another embodiment of the present disclosure, the cylindrical battery cells can be modularized.

According to another embodiment of the present disclosure, the manufacturing process of the battery cells can be simplified.

According to another embodiment of the present disclosure, the manufacturing efficiency of the battery cells can be improved.

### BRIEF DESCRIPTION OF THE DRAWINGS

FIG. 1 is an example of a battery assembly according to the present disclosure.
FIG. 2 is an exploded view of an example of a stacking assembly according to the present disclosure.
FIG. 3A is a top view of an example of a receiving member according to the present disclosure.
FIG. 3B is a top view of another example of a receiving member according to the present disclosure.
FIG. 4A is a side view of an example of a stacking assembly according to the present disclosure.
FIG. 4B is a side view of another example of a stacking assembly according to the present disclosure.
FIG. 4C is a side view of another example of a stacking assembly according to the present disclosure.
FIG. 5A is a perspective view of another example of a receiving member according to the present disclosure.
FIG. 5B is a top view of another example of a stacking assembly according to the present disclosure.
FIG. 6A is a perspective view of another example of a receiving member according to the present disclosure.
FIG. 6B is a top view of the receiving member of FIG. 6A.
FIG. 7 is a cross-sectional view of a battery assembly according to the present disclosure.

### DETAILED DESCRIPTION

Preferred embodiments of the present disclosure will be described in detail hereinafter with reference to the accompanying drawings. The apparatus configurations and control methods described herein are for the purpose of illustrating embodiments of the present disclosure and are not intended to limit the scope of the disclosure, and like reference numerals used throughout the specification refer to like components.

Certain terms used herein are for convenience of description only and are not intended to limit the embodiments shown.

As used herein, battery, secondary battery, and cell all refer to a battery cell that is equally capable of being charged and discharged.

As used herein, a battery assembly may refer to a battery module, battery pack, or energy storage device comprising battery cells.

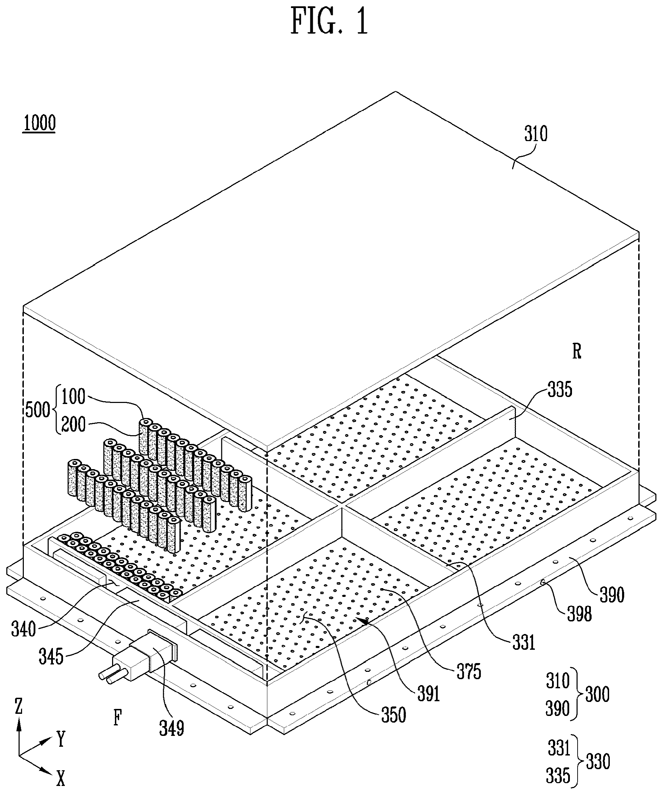

FIG. 1 is an example of a battery assembly according to the present disclosure.

A battery assembly 1000 according to the present disclosure may include a stacking assembly 500 including a plurality of battery cells 100 having a cylindrical shape and a receiving member 200 for receiving the plurality of battery cells 100, and a receiving case 300 forming a receiving space 350 for receiving the stacking assembly 500.

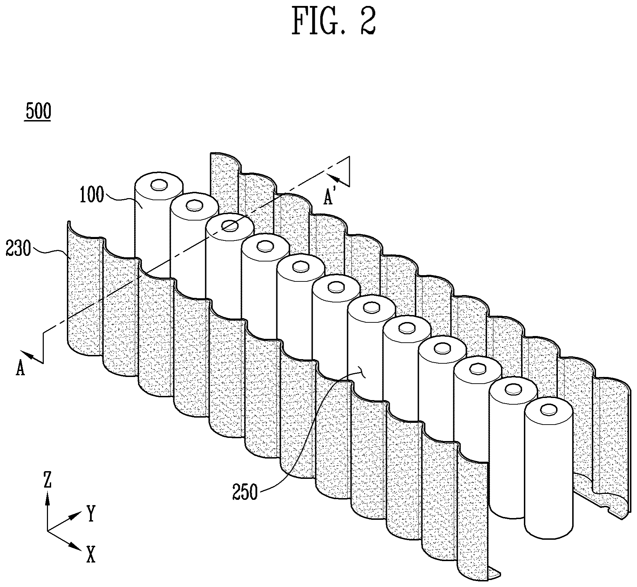

The stacking assembly 500 may include a plurality of battery cells 100 and a receiving member 200 forming a placement space 250 (see FIG. 2) for receiving the plurality of battery cells 100.

In the stacking assembly 500, the plurality of battery cells 100 may be arranged along a predetermined alignment direction.

The receiving case 300 may include a receiving body 390 having an open side and a receiving cover 310 coupled to the receiving body 390 to cover the open side.

The receiving case 300 may further include a partition 330 that compartmentalizes the receiving space 350. The partition 330 may include a first frame 331 compartmentalizing the receiving space 350 in a direction parallel to the alignment direction, and a second frame 335 compartmentalizing the receiving space 350 in a direction perpendicular to the alignment direction.

The receiving case 300 may further include a space 340 for electrical equipment formed separately from the receiving space 350. The battery assembly 1000 according to the present disclosure may receive a controller 345 for thermally and electrically managing the plurality of battery cells 100 in the space 340 for electrical equipment. The controller 345 may be referred to as a battery management system (BMS). The battery assembly 1000 according to the present disclosure may further comprise a connection 349 for electrically connecting the plurality of battery cells 100 with the outside.

While the position in which the controller 345 or the connection 349 is located is conveniently referred to herein as front F and the opposite position as rear R, this is by way of example only, and the position of the controller 345 and the connection 349 may be changed according to design.

The receiving case 300 may further comprise a receiving floor 391 forming a bottom surface of the receiving space 350. The receiving floor 391 may support the plurality of battery cells 100 received in the receiving space 350.

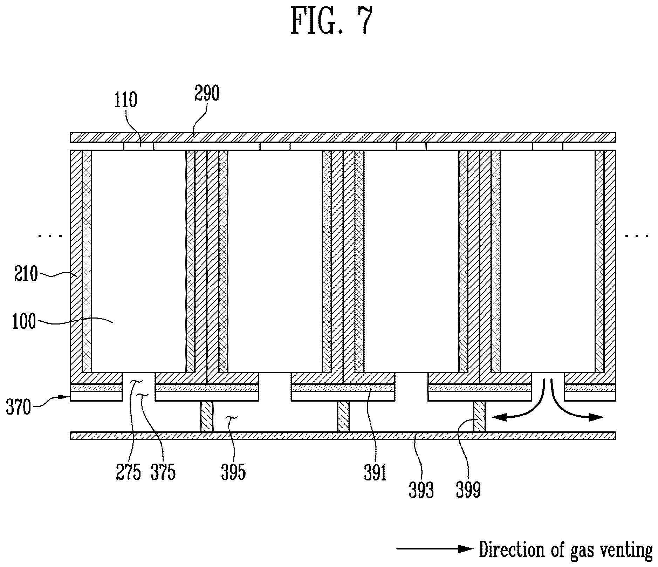

The battery assembly 1000 according to the present disclosure may further include a venting space 395 (see FIG. 7) disposed below the receiving floor 391 and facing the receiving space 350. Further, the receiving case 300 may include the receiving space 350 and the venting space 395.

The receiving floor 391 is only the bottom surface of the receiving space 350, and the receiving body 390 may separately include the bottom surface of the receiving body 390.

Thus, the receiving space 350 may be formed between the receiving floor 391 and the receiving cover 310, and the venting space 395 may be formed between the receiving floor 391 and the bottom surface of the receiving body 390.

Further, the receiving case 300 may include an outlet for communicating the venting space 395 with the outside. The outlet 398 is normally closed by a rupture disc, but when the pressure in the venting space 395 is above a certain pressure, the rupture disc may fracture and open the outlet 398.

FIG. 2 is an exploded view of an example of a stacking assembly according to the present disclosure.

The stacking assembly 500 may include a plurality of battery cells 100 and a receiving member 200 for receiving the plurality of battery cells 100. Further, the receiving member 200 may include a curved portion 230 forming a placement space 250 inside which the plurality of battery cells 100 are received.

The curved portion 230 may be wavy in shape corresponding to the battery cells 100 having a cylindrical shape. This may allow the receiving member 200 to more effectively receive the cylindrical battery cell 100 and minimize movement of the cylindrical battery cell 100 due to vibration or impact. Further, the curved portion 230 of the wavy-like shape may reduce unnecessary wasted space.

Referring to FIG. 2, the alignment direction of the plurality of battery cells 100 is shown in the X direction, but this is only an example, and the alignment direction can be changed according to the design.

Referring to FIGS. 1 and 2, the receiving member 200 supports the plurality of battery cells 100 and may function as a heat transfer path for heat dissipation of the plurality of battery cells 100.

To this end, the receiving member 200 may be formed of a thermally conductive material. For example, the receiving member 200 may be formed of a metal, such as aluminum or steel, or a composite material.

Preferably, the thermally conductive material may have a thermal conductivity of 50 W/m-K or more.

For example, the receiving member 200 may be made of aluminum by die casting, or of steel by pressing.

On the other hand, the stacking assembly 500 may comprise a plurality of pieces. When the plurality of stacking assembly 500 are disposed in the receiving space 350, the receiving member 200 may be coated to electrically insulate each other, i.e., the curved portion 230 and the supporting portion 271 may are provided with an insulation coating.

Alternatively, the receiving member 200 may be taped with an adhesive sheet having insulating properties.

In addition, an insulating coating or adhesive sheet comprising a thermal conductivity of 0.5 W/m-K or greater may be used to maintain the heat transfer function of the receiving member 200.

Each of the plurality of stacking assembly 500 is a modularized concept, such that when the plurality of stacking assembly 500 are received in the receiving case 300, the stacking assembly 500 can be used as a single assembly unit. Thus, assembly time may be relatively reduced and the manufacturing process may be simplified compared to accommodating the plurality of battery cells 100 individually in the receiving space 350. Ultimately, the introduction of the stacking assembly 500 may improve battery manufacturing efficiency.

Further, when the plurality of stacking assembly 500 are placed in the receiving space 350, any one of the stacking assembly 500 and any other stacking assembly 500 adjacent to the plurality of stacking assembly 500 may be arranged such that concave and convex portions of the curved portion 230 alternate with each other. This is to minimize the occurrence of dead space due to the shape of the curved portion 230.

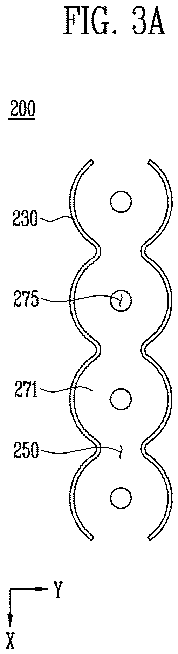

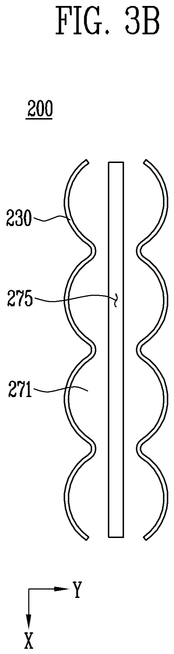

FIG. 3A is a top view of an example of a receiving member according to the present disclosure. FIG. 3B is a top view of another example of a receiving member according to the present disclosure.

More specifically, FIGS. 3A and 3B illustrate an example of the receiving member 200 as viewed from the A-A' direction of FIG. 2.

Referring to FIGS. 1 and 3, a battery assembly 1000 according to the present disclosure may includes a plurality of battery cells 100 having a cylindrical shape, a receiving member 200 forming a placement space 250 for receiving the plurality of battery cells 100, and a receiving case 300 including a receiving space 350 for receiving the plurality of battery cells 100 and the receiving member 200, a receiving floor 391 forming a bottom surface of the receiving space 350 and including a communication hole 375, a venting space 395 (see FIG. 7) disposed below the receiving floor 391, and a communication hole 375 formed on the receiving floor 391 to communicate the receiving space 350 and the venting space 395, wherein the receiving member 200 may include a supporting portion 271 forming a bottom surface of the receiving member 200 and supported by the receiving floor 391, a curved portion 230 extending from the supporting portion 271 toward the plurality of battery cells 100 and formed as a curved surface 230 corresponding to a portion of each outer peripheral surface of the plurality of battery cells 100 and facing the plurality of battery cells 100, and a through-hole 275 penetrating the supporting portion 271 at a location corresponding to the communication hole 375.

The curved portion 230 may be provided in a wavy shape corresponding to a portion of the outer peripheral surface of the plurality of battery cells 100. Since the curved portion 230 is required to transfer heat generated by the plurality of battery cells 100 through the outer peripheral surface of the plurality of battery cells 100 and dissipate it with the outside, the size of the area of the curved portion 230 may be a size corresponding to an area that can face at least 50% of the area of the outer peripheral surface of the plurality of battery cells 100.

Thus, not only does the curved portion 230 perform a heat transfer function over a large area, but the curved portion 230 may also perform the function of a blocking member or a shielding member to delay heat propagation between the plurality of battery cells 100 or between the stacking assembly 500.

Since the curved portion 230 extends from one end or both ends of the supporting portion 271 and extends toward a height direction (Z-direction) of the receiving case 300, the one edge or both edges of the supporting portion 271 may also be provided with a shape corresponding to the wavy shape of the curved portion 230.

In order for the curved portion 230 to receive heat transfer through each outer surface of the plurality of battery cells 100, the curved portion 230 will need to be in contact with the outer surface of the plurality of battery cells 100.

To accomplish this, the plurality of battery cells 100 may be received in the placement space 250 while engaging the curved surfaces 230 in interference-fit manner.

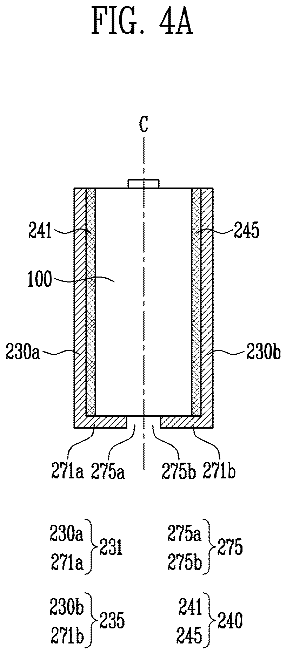

Alternatively, the receiving member 200 may further comprise a heat dissipation portion 240 (see FIG. 4A) between the curved portion 230 and the plurality of battery cells 100. The heat dissipation portion 240 may be a thermal adhesive, which may be liquidly injected and cured between the curved portion 230 and the plurality of battery cells 100. Thus, the heat dissipation portion 240 may minimize any gap that may occur between the curved portion 230 and the plurality of battery cells 100.

Referring to FIG. 3A, the supporting portion 271 may include a through-hole 275 through the supporting portion 271.

In one embodiment, the through-holes 275 may be plural, wherein the plurality of through-holes 275 may be arranged along the alignment direction.

The plurality of through-holes 275 may be arranged to overlap the plurality of battery cells 100 in a one-to-one correspondence with the plurality of battery cells 100.

Further, the through-holes 275 and the communication holes 375 may each be provided in plurality, and the plurality of through-holes 275 may be arranged to correspond one-to-one to the plurality of communication holes 375.

In other words, the plurality of battery cells 100, the plurality of through-holes 275, and the plurality of communication holes 375 may all be nested. In other words, an imaginary central axis C (see FIG. 4A) of any one of the battery cells 100 may pass through any one of the plurality of communication holes 375 corresponding to any one of the battery cells 100.

Further, the imaginary central axis C may pass through one through-hole 275 corresponding to each of the one battery cells 100.

More preferably, the imaginary central axis C may pass through the respective centers of the one communication hole 375 and one through-hole 275.

Referring to FIG. 3B, the through-holes 275 extend along the alignment direction of the plurality of battery cells 100 and may overlap with the communication holes 375.

In other words, instead of having a plurality of the through-holes 275, a single through-hole 275 along the alignment direction may be formed in the supporting portion 271.

FIG. 3B illustrates that the through-hole 275 has a constant width along the Y-direction. However, in contrast, the width along the Y-direction of the through-hole 275 may be variable corresponding to the shape of the curved portion 230.

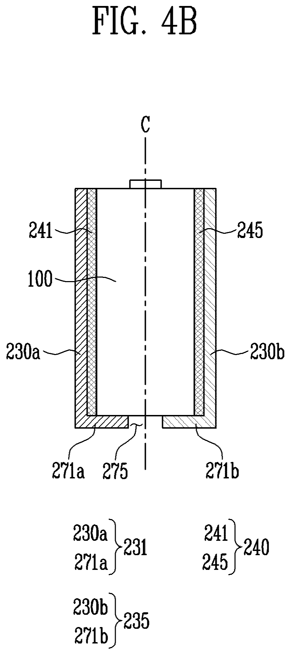

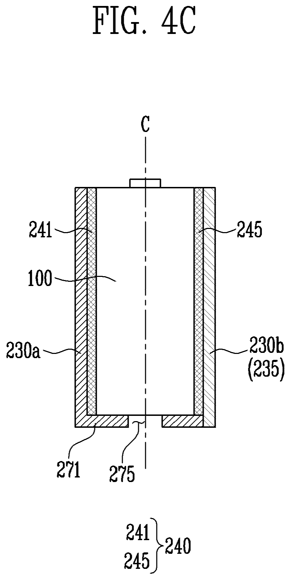

FIG. 4A is a side view of an example of a stacking assembly according to the present disclosure. FIG. 4B is a side view of another example of a stacking assembly according to the present disclosure. FIG. 4C is a side view of another example of a stacking assembly according to the present disclosure.

Referring now to FIGS. 4A to 4C, a receiving member 200 according to the present disclosure may comprise a first body 230a and a second body 230b arranged between the plurality of battery cells 100, the supporting portion 271 including a first bottom 271a extending from one end of the first body 230a towards the second body 230b, a first recess 275a in which a portion of one edge of the first bottom 271a is recessed in a direction away from the second body 230b, the second bottom 271b extending from one end of the second body 230b toward the first bottom 230a, and a second bottom 271b including a portion of one edge of the second bottom 271b recessed in a direction away from the first body 230a at a location corresponding to the first recess 275a.

Thus, the first body 230a and the second body 230b may form the curved portion 230, and the first bottom 271a and the second bottom 271b may form the supporting portion 271. And, the first recess 275a and the second recess 275b may be connected to each other to form the through-hole 275.

Referring to FIGS. 4A and 4B, the first body 230a and the first bottom 271a are collectively referred to as first member 231, and the second body 230b and the second bottom 271b are collectively referred to as second member 235.

Referring to FIG. 4A, the first member 231 and the second member 235 may be connected with each other to form the receiving member 200.

In this case, the first member 231 and the second member 235 may be formed of the same material, i.e., the first body 230a, the first bottom 271a, the second body 230b, and the second bottom 271b may be formed of the same material. Preferably, when the first member 231 and the second member 235 are formed of the same material, the material of the first member 231 and the second member 235 may be a thermally conductive material.

The battery assembly 1000 according to the present disclosure may further comprise a heat dissipation portion 240 between the curved portion 230 and the plurality of battery cells 100.

Referring to FIGS. 4A to 4C, the heat dissipation portion 240 may include a first heat dissipation portion 241 injected and cured between the first body 230a and the plurality of battery cells 100, and a second heat dissipation portion 242 injected and cured between the second body 230b and the plurality of battery cells 100.

Referring to FIG. 4B, the first member 231 and the second member 235 may be formed of different materials, i.e., the first body 230a, the first bottom 271a, the second body 230b, and the second bottom 271b may be formed of different materials.

As described above, the function of the first member 231 and the second member 235 may be to perform not only a heat transfer function but also a heat retarding function during heat explosion. To this end, one of the first member 231 and the second member 235 may be formed of a thermally conductive material, and the other may be formed of a fire-resistant or flame-retardant material.

For example, the fire resistant or flame retardant material may be any one of MICA, Glass Fiber Reinforced Polymer, ceramic wool, or a combination thereof. Further, the fire-resistant or flame-retardant material may be silica gel, alumina, or aerogel comprising silicon dioxide.

Referring to FIG. 4C, the first member 231 and the second member 235 may have different shapes.

For example, the curved portion 230 may include a first body 230a and a second body 230b arranged between the plurality of battery cells 100, and the supporting portion 271 may extend from one end of the first body 230a and connect with one end of the second body 230b. That is, the first body 230a and the supporting portion 271 may form the first member 231, and the second body 230b may form the second member 235.

For example, if the first member 231 is formed of a thermally conductive material and the second member 235 is formed of a fire-resistant or flame-retardant material, it is not necessary for the supporting portion 271 to be a fire-resistant or flame-retardant material to prevent heat propagation. Thus, for thermal conductivity of the receiving member 200, the supporting portion 271 as a whole may be formed integrally with the first body 230a.

On the other hand, any of the first member 231 and the second member 235 may be removed as needed. For example, when any one of the first member 231 and the second member 235 is adjacent to a side of the receiving case 300 or a side of the partition 330, the heat transfer function and the heat wave blocking function can be replaced by the side of the receiving case 300 or the side of the partition 330.

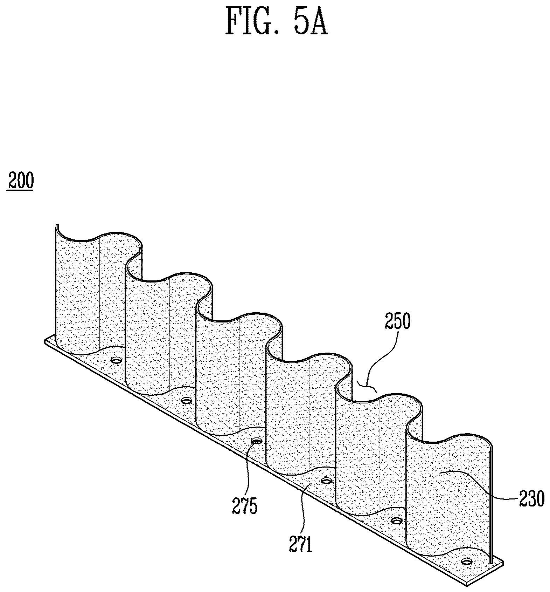

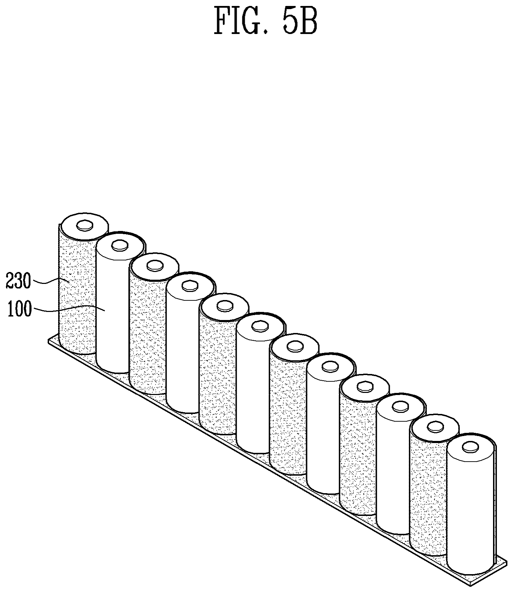

FIG. 5A is a perspective view of another example of a receiving member according to the present disclosure. FIG. 5B is a top view of another example of a stacking assembly according to the present disclosure.

Referring to FIG. 5A, the receiving member 200 may include a supporting portion 271 and a curved portion 230 extending from the supporting portion 271 but formed in a zigzag shape. Further, the receiving member 200 may further comprise a through-hole 275 through the support 271.

In other words, the curved portion 230 may be configured in a zigzag pattern, thereby separating the plurality of placement spaces 250 into a plurality of spaces wherein each of the plurality of battery cells 100 may be received. The through-holes 275 may be formed in each of the separated plurality of spaces.

Referring to FIG. 5B, the plurality of battery cells 100 may each be disposed in the separated plurality of spaces formed by both sides of the curved portion 230.

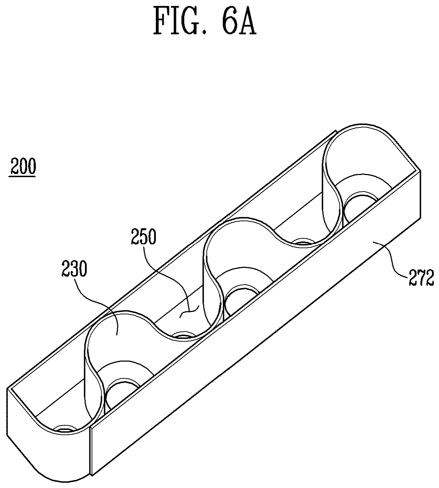

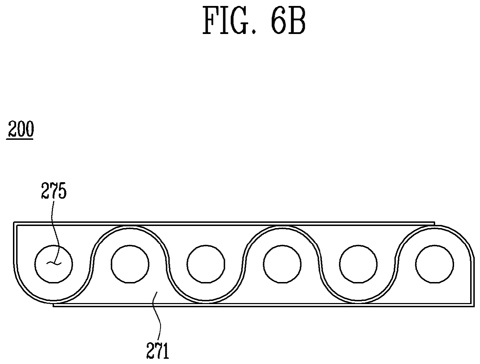

FIG. 6A is a perspective view of another example of a receiving member according to the present disclosure. FIG. 6B is a top view of the receiving member of FIG. 6A.

Referring to FIGS. 6A and 6B, the receiving member 200 may include a supporting portion 271, and a curved portion 230 extending from the supporting portion 271 but formed in a wavy shape.

And, the receiving member 200 may further comprise side portions 272 extending from a periphery of the support 271 to surround at least a portion of the plurality of battery cells 100, i.e., the side portions 272 may surround the curved portion 230 along a periphery of the support 271.

Further, the receiving member 200 may further comprise a through-hole 275 through the supporting portion 271.

In one embodiment, the curved portion 230 may be configured in a zigzag shape to separate the placement space 250 into a plurality of spaces such that each of the plurality of battery cells 100 is received between the curved portions 230.

FIG. 7 is a cross-sectional view of a battery assembly according to the present disclosure.

A battery assembly 1000 according to the present disclosure includes a plurality of stacking assemblies 500 including a supporting portion 271 forming a bottom surface of a placement space 250 for a plurality of battery cells 100 and a curved portion 230 extending from the supporting portion 271 toward the plurality of battery cells 100 and formed as a curved surface in a wavy shape corresponding to a portion of each outer peripheral surface of the plurality of battery cells 100 and facing the plurality of battery cells 100, a busbar 290 electrically connected to the plurality of battery cells 100, a receiving case 300 forming a receiving space 350 for receiving the plurality of stacking assembly 500, and a partition 330 compartmentalizing the receiving space 350.

The busbar 290 may be disposed between the receiving cover 310 (see FIG. 1) and the plurality of battery cells 100. Further, the battery assembly 1000 according to the present disclosure may further include an insulating cover (not shown) between the busbar 290 and the receiving cover 310.

The busbar 290 may be electrically connected with each terminal portion 110 of the plurality of battery cells 100.

Referring to FIG. 7, the battery assembly 1000 according to the present disclosure may further comprise a cooling path 370 disposed on one of the both sides of the receiving floor 391 through which a coolant moves to cool the plurality of battery cells 100.

Thus, the battery assembly 1000 according to the present disclosure can more efficiently perform thermal management of the plurality of battery cells 100 by the cooling path 370 and the receiving member 200.

The cooling path 370 may also be referred to as a cooling plate, as it is configured in the shape of a plate facing the receiving floor 391.

On the other hand, referring to the arrows in FIG. 7, when a gas is generated in any one of the battery cells 100, and at least a portion of the gas moves into the venting space 395 through the through-hole 275 and the communication hole 375.

If the receiving space 350 is a space formed between the receiving floor 391 and the receiving cover 310, then the venting space 395 may be formed between the receiving floor 391 and the bottom surface 393 of the receiving body 390.

Gases entering the venting space 395 can be discharged with the outside through the outlet 398 (see FIG. 1).

Furthermore, the receiving case 300 may comprise a wall 399 compartmentalizing the venting space 395. This is to prevent gas entering the venting space 395 through any of the through-holes 275 and any of the through-holes 275 from entering back into the receiving space 350 through any of the other communication holes 375.

And, the wall 399 may extend along the alignment direction.

Further, the battery assembly 1000 according to the present disclosure may include an adhesive (not shown) between the supporting portion 271, which is the bottom surface of the receiving member 200, and the receiving floor 391. This is to minimize movement of the receiving member 200 in the receiving space 350 by vibration or impact without being fixed.

Some of the aspects of the present disclosure are as follows:
Aspect 1: A battery assembly comprising: a plurality of battery cells having a cylindrical shape; a receiving member forming a placement space for receiving the plurality of battery cells; and a receiving case including a receiving space for receiving the plurality of battery cells and the receiving member, a receiving floor forming a bottom surface of the receiving space and including a communication hole, a venting space disposed below the receiving floor, and a communication hole formed on the receiving floor to communicate the receiving space and the venting space; wherein the receiving member includes a supporting portion forming a bottom surface of the receiving member and supported by the receiving floor, a curved portion extending from the supporting portion toward the plurality of battery cells and formed as a curved surface corresponding to a portion of each outer peripheral surface of the plurality of battery cells and facing the plurality of battery cells, and a through-hole penetrating the supporting portion at a location corresponding to the communication hole.
Aspect 2: The battery assembly according to aspect 1, wherein the curved portion has a wavy shape.
Aspect 3: The battery assembly according to aspect 1 or 2, further comprising: a heat dissipation portion positioned between the curved portion and the plurality of battery cells.
Aspect 4: The battery assembly according to preceding aspects, wherein the curved portion and the supporting portion are provided with an insulation coating.
Aspect 5: The battery assembly according to preceding aspects, wherein the curved portion includes a first body and a second body arranged with the plurality of battery cells therebetween,
   wherein the supporting portion includes a first bottom extending from one end of the first body toward the second body, a first recess in which a portion of one edge of the first bottom is recessed in a direction away from the second body, a second bottom extending from one end of the second body toward the first body, and a second recess in which a portion of one edge of the second bottom is recessed in a direction away from the first body at a location corresponding to the first recess, and
   wherein the first recess and the second recess are connected to each other to form the through-hole when the first bottom and the second bottom are connected.
Aspect 6: The battery assembly according to aspect 5, wherein the first body, the first bottom, the second body, and the second bottom are formed of the same material.
Aspect 7: The battery assembly according to aspect 5, wherein the first body, the first bottom, the second body, and the second bottom are formed of different materials.
Aspect 8: The battery assembly according to preceding aspects, wherein the curved portion includes the first body and the second body arranged with the plurality of battery cells interposed therebetween, and the supporting portion extends from one end of the first body and is connected to one end of the second body.
Aspect 9: The battery assembly according to preceding aspects, wherein the through-hole and the communication hole are each provided in a plurality, and the through-holes are arranged to correspond one-to-one to the communication holes.
Aspect 10: The battery assembly according to aspect 9, wherein an imaginary central axis of any one of the battery cells passes through any one of the through-holes corresponding to the one of the battery cells.
Aspect 11: The battery assembly according to preceding aspects, wherein the through-hole extends along an alignment direction of the plurality of battery cells and overlaps with the communication hole.
Aspect 12: The battery assembly according to preceding aspects, wherein the curved portion is provided in a zigzag shape, and the placement space is divided into a plurality of spaces so that the battery cells are received in the plurality of spaces respectively between the curved portions.
Aspect 13: The battery assembly according to aspect 12, wherein the receiving member further includes side portions extending from a periphery of the supporting portion and surrounding at least a portion of the plurality of battery cells.
Aspect 14: The battery assembly according to preceding aspects, wherein a gas is generated in any one of the battery cells, and at least a portion of the gas moves into the venting space through the through-hole and the communication hole.
Aspect 15: A battery assembly comprising: a plurality of stacking assembly including a supporting portion forming a bottom surface of a placement space for a plurality of battery cells and a curved portion extending from the supporting portion toward the plurality of battery cells and formed as a curved surface in a wavy shape corresponding to a portion of each outer peripheral surface of the plurality of battery cells and facing the plurality of battery cells; a busbar electrically connected to the plurality of battery cells; a receiving case forming a receiving space for receiving the plurality of stacking assembly; and a partition compartmentalizing the receiving space.

The description of the present disclosure is for illustrative purposes only, and a person skilled in the art to which the present disclosure pertains will understand that the present disclosure may be easily modified into other specific forms without changing the technical idea or essential features of the present disclosure. Therefore, it should be understood that the embodiments described above are exemplary in all respects and not limiting. For example, each component described as a single entity may be implemented in a distributed manner, and likewise, components described as distributed may be implemented in a combined manner.

The scope of the present disclosure is indicated by the appended claims rather than the detailed description above, and all changes or modifications derived from the meaning and scope of the claims and their equivalent concepts should be construed as being in the scope of the present disclosure.

## Claims

1. A battery assembly comprising:
a plurality of battery cells having a cylindrical shape;
a receiving member forming a placement space for receiving the plurality of battery cells; and
a receiving case including a receiving space for receiving the plurality of battery cells and the receiving member, a receiving floor forming a bottom surface of the receiving space and including a communication hole, a venting space disposed below the receiving floor, and a communication hole formed on the receiving floor to communicate the receiving space and the venting space;
wherein the receiving member includes a supporting portion forming a bottom surface of the receiving member and supported by the receiving floor, a curved portion extending from the supporting portion toward the plurality of battery cells and formed as a curved surface corresponding to a portion of each outer peripheral surface of the plurality of battery cells and facing the plurality of battery cells, and a through-hole penetrating the supporting portion at a location corresponding to the communication hole.

2. The battery assembly according to claim 1, wherein the curved portion has a wavy shape.

3. The battery assembly according to claim 1 or 2, further comprising:
a heat dissipation portion positioned between the curved portion and the plurality of battery cells.

4. The battery assembly according to preceding claims, wherein the curved portion and the supporting portion are provided with an insulation coating.

5. The battery assembly according to preceding claims, wherein the curved portion includes a first body and a second body arranged with the plurality of battery cells therebetween,
wherein the supporting portion includes a first bottom extending from one end of the first body toward the second body, a first recess in which a portion of one edge of the first bottom is recessed in a direction away from the second body, a second bottom extending from one end of the second body toward the first body, and a second recess in which a portion of one edge of the second bottom is recessed in a direction away from the first body at a location corresponding to the first recess, and
wherein the first recess and the second recess are connected to each other to form the through-hole when the first bottom and the second bottom are connected.

6. The battery assembly according to claim 5, wherein the first body, the first bottom, the second body, and the second bottom are formed of the same material.

7. The battery assembly according to claim 5, wherein the first body, the first bottom, the second body, and the second bottom are formed of different materials.

8. The battery assembly according to preceding claims, wherein the curved portion includes the first body and the second body arranged with the plurality of battery cells interposed therebetween, and the supporting portion extends from one end of the first body and is connected to one end of the second body.

9. The battery assembly according to preceding claims, wherein the through-hole and the communication hole are each provided in a plurality, and the through-holes are arranged to correspond one-to-one to the communication holes.

10. The battery assembly according to claim 9, wherein an imaginary central axis of any one of the battery cells passes through any one of the through-holes corresponding to the one of the battery cells.

11. The battery assembly according to preceding claims, wherein the through-hole extends along an alignment direction of the plurality of battery cells and overlaps with the communication hole.

12. The battery assembly according to preceding claims, wherein the curved portion is provided in a zigzag shape, and the placement space is divided into a plurality of spaces so that the battery cells are received in the plurality of spaces respectively between the curved portions.

13. The battery assembly according to claim 12, wherein the receiving member further includes side portions extending from a periphery of the supporting portion and surrounding at least a portion of the plurality of battery cells.

14. The battery assembly according to preceding claims, wherein a gas is generated in any one of the battery cells, and at least a portion of the gas moves into the venting space through the through-hole and the communication hole.

15. A battery assembly comprising:
a plurality of stacking assemblies including a supporting portion forming a bottom surface of a placement space for a plurality of battery cells and a curved portion extending from the supporting portion toward the plurality of battery cells and formed as a curved surface in a wavy shape corresponding to a portion of each outer peripheral surface of the plurality of battery cells and facing the plurality of battery cells;
a busbar electrically connected to the plurality of battery cells;
a receiving case forming a receiving space for receiving the plurality of stacking assembly; and
a partition compartmentalizing the receiving space.
